# EUROPÄISCHE PATENTSCHRIFT

(11) **EP 2 785 600 B1**
(45) Veröffentlichungstag und Bekanntmachung des Hinweises auf die Patenterteilung: **13.07.2016**
(21) Anmeldenummer: 12805583.7
(22) Anmeldetag: 30.11.2012
(51) Int. Cl.: B65B 21/06, B65B 17/02, B65B 35/46, B65B 35/58, B65G 29/00, B65G 47/08, B65G 47/84

(54) **VORRICHTUNG ZUR BILDUNG VON VERPACKUNGSEINHEITEN**
DEVICE FOR FORMING PACKAGING UNITS
DISPOSITIF DE FORMATION D'UNITÉS D'EMBALLAGE

(30) Priorität: 02.12.2011 DE 102011119970; 01.02.2012 DE 102012100810
(43) Veröffentlichungstag der Anmeldung: 08.10.2014
(60) Teilanmeldung: 15191455.3
(73) Patentinhaber: KHS GmbH, 44143 Dortmund (DE)
(72) Erfinder: NITSCH, Thomas, 47533 Kleve (Warbeyen) (DE); STUHLMANN, Christopher, 34497 Korbach (DE); VAN WICKEREN, Ernst, 47652 Weeze (DE); WAGNER, Stefan, 46509 Xanten (DE); ZAHN, Volker, 34471 Volkmarsen (DE)
(86) Internationale Anmeldenummer: PCT/EP2012/004966
(87) Internationale Veröffentlichungsnummer: WO 2013/079220

(56) Entgegenhaltungen:
- EP-A1- 1 495 973
- EP-A2- 2 258 625
- WO-A2-00/68087
- US-A- 4 078 357

## Beschreibung

Die Erfindung bezieht sich auf eine Vorrichtung zur Herstellung von Gebinden, gemäß dem Oberbegriff des Patentanspruchs 1, umfassend eine ein- oder mehrbahnige Behälterzuführung oder ein- oder mehrbahnige Behälterströme mindestens einen um eine zentrale Achse rotierenden Hauptstern eines Sterntransporteurs mit mindestens einem Auftragselement im Bereich des Sterntransporteurs mittels mindestens ein Haft- oder Klebemittel und/oder mindestens ein Haft- oder Klebemittelauftrag auf oder an Behälter applizierbar ist. Weiterhin umfasst die Erfindung ein Verfahren unter Nutzung der vorgenannten Vorrichtung.

Behälter im Sinne der Erfindung sind beispielsweise Flaschen, Dosen, Tuben, Pouches, jeweils aus Metall, Glas und/oder Kunststoff, also zum Beispiel auch PET-Flaschen, aber auch andere Packmittel, insbesondere solche, die zum Abfüllen von flüssigen oder viskosen Produkten geeignet sind, aber auch bereits zu Gruppen (Mehrfachpack) zusammen gefasste Behälter. Derartige Behälter, z.B. PET-Flaschen weisen einen Kontaktbereich auf, welcher sphärisch gewölbt ausgeführt ist, so dass die Behälter quasi aneinander um eine Umfangsbahn, also an einem "Abrollring" abrollen können. Bei Glasflaschen ist dies bei mehrmaligem Gebrauch der Flasche zum Beispiel mittels des meistens in heller Hervorhebung erkennbaren Abnutzungsringes erkennbar. Derartige "Abrollringe" können bei PET-Flaschen nicht nur im Kopfbereich, sondern auch im Fußbereich angeordnet sein.

Im Detail erfolgt die Herstellung der Gebinde z.B. in der Weise, dass die Behälter auf einer Transportebene eines Transporteurs aufstehend und mit ihrer Behälterachse in vertikaler Richtung oder im Wesentlichen vertikaler Richtung orientiert in einem Massentransport bzw. in einem breiten Behälterstrom zugeführt werden, in dem die Behälter hinsichtlich markanter Behälter und/oder Ausstattungsmerkmale eine willkürliche Orientierung aufweisen. Dieser breite Behälterstrom wird dann durch Gasseneinteüung in mehrere einspurige Behälterströme umgewandelt. In weiteren Verfahrensschritten erfolgt das Abteilen der die späteren Gebinde bzw. deren Behältergruppen bildenden Behälter aus den einspurigen Behälterströmen, das Zusammenführen der notwendigen Anzahl von Behältern jeweils zu einer verdichteten Behältergruppe, in der die Behälter mit mehreren Mantel- oder Umfangsflächen, also mit den Kontakt- oder Berührflächen gegeneinander anliegen, und dass Verbinden der Behälter jeder Behältergruppe zu dem kompakten und festen bzw. stabilen Gebinde.

Es ist bekannt, mehrere Artikel jeweils zu einer Artikelgruppe zusammen zu fassen oder zu formieren und aus den Artikelgruppen unter Verwendung von Schrumpffolien (z.B. US 7 726 464 A1) feste bzw. transportfähige Lager- und Transporteinheiten oder Gebinde herzustellen. Nachteilig ist hierbei unter anderem, dass die dabei verwendeten Folien sowie insbesondere das Aufschrumpfen der Folien durch Wärme- oder Energieeintrag nicht unerhebliche Kosten verursacht.

Vorgeschlagen wurde auch bereits, transportfähige Gebinde dadurch herzustellen, dass die jeweils zu einer Behältergruppe formierten Behälter durch eine die Behältergruppe schlaufenartig umgreifende Umreifung (DE 10 2009 025 824 A1, DE 10 2009 044 271 A1, DE 41 26 212 A1) verpackt, d.h. miteinander zu einem Gebinde verbunden werden, was eine besonders kostengünstige und einfache Möglichkeit zur Herstellung von Gebinden bzw. Transport- und Lagereinheiten darstellt. Die Umreifung kann auch mit den Behältern verklebt werden. Nachteilig bei der Umreifung ist allerdings, dass beim ersten Entnehmen eines Behälters aus einem solchen Gebinde die in dem Gebinde verbliebenen Behälter durch die Umreifung nicht mehr zusammengehalten werden. Dies gilt nicht nur dann, wenn die Umreifung getrennt oder zerschnitten wird, sondern auch dann, wenn es möglich ist, ohne Durchtrennen der Umreifung einen Behälter aus dem Gebinde zu entnehmen.

Weiterhin besteht beim Transport derartiger Gebinde auf einem Bandfördermittel immer die Gefahr, dass sich zylindrische oder weitgehend zylindrische Artikel, wie Dosen, Flaschen oder Behälter durch Vibration, Stöße etc. eine nestende Position einnehmen, also in die Lücke der Nachbarreihe rutschen. Um dies zu verhindern muss bei bekannten Gebinden eine sehr große Spannung auf die Umreifung gebracht werden.

Aus der EP 1 495 973 B1 ist eine Vorrichtung und ein Verfahren zur Bildung von Behältergruppen bekannt, bei welchem über zwei Haupttransport- und Ausrichtungssterne Behälter mündungs- und bodenseitig gehalten und ausgerichtet werden. Diese werden dann in der Soll-Winkellage beim Weitertransport fixiert und verdichtet. Abschließend wir von oben ein netzartiges Trägerelement über die Behälter gestülpt und diese somit final gruppiert.

Die DE 10 2006 037 105 A1 dagegen befasst sich mit einem Verfahren zum Zusammenstellen von Flaschenpaketen, bei welchem auf beiden Seiten einer Bahn ein Drehstern vorgesehen wird, welcher Flaschenhälse in Klammern an Flachträgern hineindrückt. Das Flaschenpaket wird noch mit einem Band oder einer Umhüllung (Folie) umfasst.

Gemäß der DE 23 31 193 wird an Behälter ein Klebemittel in schmalen Flächen oder Reihen angebracht, wobei jeweils benachbarte Flächen, welche nicht mit Klebemittel versehen sind, ein Greifen der Packung zum Zwecke des Tragens ermöglichen soll. An den Klebestellen kleben die Behälter aneinander. Die EP 2 096 039 A1 offenbart ebenfalls Behälter mit einem Klebemittel zu versehen, wobei aber zudem noch eine Schrumpffolie um das Flaschenpaket angeordnet wird. In der DE10 2008 038 146 A1 ist ein Wellentriebssystem offenbart, welches einen den Motor enthaltenen Koaxial-Direktantrieb aufweist, in dem der Rotor des Motors direkt auf der Welle festgelegt und der Stator die Welle und den Rotor außen umfassend fixiert sind. Die auf die Anmelderin zurückgehende EP 1 647 518 B1 offenbart eine Verschließmaschine, welche eine ortsfeste Zentralsäule aufweist, die frei von Elementen zur mechanischen Kraftübertragung ausgeführt ist, und demzufolge lediglich Leitungen enthält.

Aufgabe der Erfindung ist es, eine Vorrichtung und ein Verfahren zum Herstellen von Gebinden der Eingangs genannten Art anzugeben, bei dem trotz des Verzichts auf eine umgreifende Folie und/oder trotz des Verzichts auf eine Umreifung in einfacher Weise stets vermieden ist, dass die Artikel bei dem Transport in eine nestende Position gelangen, wobei auch nach der Entnahme eines oder mehrerer Artikel aus einem Gebinde der Zusammenhalt der verbliebenen Artikel im Gebinde erhalten bleibt bzw. wieder hergestellt werden kann.

Zur Lösung dieser Aufgabe ist eine Vorrichtung zur Herstellung von Gebinden entsprechend dem Patentanspruch 1 vorgesehen, wobei ein Sterntransporteur für jeden der Behälterströme vorgesehen ist, wobei der jeweilige Hauptstern des jeweiligen Sterntransporteurs eine Vielzahl von fußseitigen Führungen und/oder Kopfführungen für Behälter aufweist, und wobei unmittelbar nach dem Hauptstern oder einer Ausleitvorrichtung eine Abteil- und/oder Verdichtereinheit oder eine Abteil- oder Verdichterstrecke zum Gruppieren und Verdichten sowie temporäre Anpressung einer vorbestimmten Anzahl von Behältern vorgesehen ist, mittels welcher die Behälter stromab des Sterntransporteurs zu einem Gebinde zusammengefasst und weitertransportiert werden. Zielführend ist, wenn der jeweilige Hauptstern des jeweiligen Sterntransporteurs sowohl eine Vielzahl von fußseitigen Führungen als auch eine Vielzahl von Kopfführungen für die Behälter aufweist. Weiterhin ist zur Lösung der Aufgabe ein entsprechendes Verfahren vorgesehen.

Behälter im Sinne der Erfindung sind, z.B. PET-Flaschen, d.h. u.a. Flaschen, Dosen Tuben, Pouches, jeweils aus Metall, Glas und/oder Kunststoff, aber auch andere Packmittel, insbesondere solche, die zum Abfüllen von flüssigen oder viskosen Produkten geeignet sind, aber auch bereits zu Gruppen (Mehrfachpack) zusammen gefasste Behälter. Die Behälter des Gebindes sind in nicht-nestender Position angeordnet.

"Haft- oder Klebemittel" in Sinne der Erfindung sind u.a. alle Materialien oder Massen, mit denen eine Klebeverbindung zwischen Behältern möglich ist, insbesondere Verbindungen, Materialien oder Massen, die im flüssigen oder zähflüssigen Zustand aufgebracht einen selbstklebenden Auftrag bilden und/oder unter Anwendung von Druck und/oder durch Energieeintrag und/oder nach einem Aushärten oder Vernetzen (auch durch Energieeintrag) eine Klebeverbindung bewirken. "Haftoder Klebemittel" in Sinne der Erfindung sind u.a. auch Mehrschichtmaterialien, z.B. solche aus wenigstens einem Trägermaterial, welches mit einem Material beschichtet ist, mit dem eine Klebeverbindung zwischen Behältern möglich ist, also mindestens zweiseitig haftend- und/oder klebend aktiv sind. Solche Haft- oder Klebemittel können als Pads bezeichnet werden. Ein "klebender" Behälter weist im Sinne der Erfindung Haft- oder Klebemittel auf, bzw. ist mit einem Haft- und Klebemittelauftrag versehen. Das Haft- oder Klebemittel ist bevorzugt derart gewählt, dass die Behälter händisch und zerstörungsfrei aus dem Gebinde lösbar bzw. voneinander trennbar sind. Denkbar ist, dass flüssiges Klebemittel von den Auftragselementen aufgetragen wird. Möglich ist, wenn ein niedrigviskoser UV-aushärtender Klebstoff aufgetragen wird. Geeignet wäre auch ein Heißleirn, welcher jedoch sehr schnell abkühlt, und so eventuell seine Klebeigenschaften aufgeben könnte, bevor die Behälter des Gebindes hinreichend miteinander verklebt sind. Ein UV-aushärtender Klebstoff ist auch vorteilhaft hinsichtlich der besonders leichten Einstellung seiner gewünschten Eigenschaften. Eine entsprechende Aushärtstation bzw. eine Aushärtstrecke ist in sinnvoller Weise stromab der Auftragselemente stationär oder entlang des Lineartransporteurs oberhalb bzw. gegebenenfalls auch unterhalb vorgesehen. Eine Aushärtstation kann zum Beispiel ein Tunnel mit UV-Ausleuchtung sein. Die Aushärtstation ist bevorzugt stromab dem Sterntransporteur, bevorzugt an dem Lineartransporteur angeordnet.

Zielführend ist, wenn der Sterntransporteur den Hauptstern, eine Einleitvorrichtung und die Ausleitvorrichtung aufweist. Die Einleitvorrichtung kann als Einleitstern ausgeführt sein, wobei die Ausleitvorrichtung als Ausleitstern ausgeführt sein kann. Die Einleitvorrichtung bewirkt eine Anpassung des einlaufenden Behälterstromes an die Teilung des Hauptsterns, so dass die jeweiligen Behälter problemlos an den Hauptstern übergeben werden können. Mit der Ausleitvorrichtung können die Behälter in vorbestimmten Abstand weitertransportiert werden.

Zweckmäßig ist, wenn die fußseitigen Führungen als Drehteller ausgeführt sind, wobei die Kopfführungen halteseitig Pack- oder Zentriertulpen aufweisen, oder als diese ausgestaltet sind. Der jeweilige Behälter ist so quasi zwischen dem Drehteller und der Pack- oder Zentriertulpe eingespannt, und lagesicher gehalten. Mit dem Drehteller und der Kopfführung kann eine zur Rotation um die Achse des Hauptsterns zusätzliche Rotation des einzelnen Behälters bewirkt werden. Dies ist günstig, um den Behälter auf seinem Transportweg um die Rotationsachse des Hauptsterns relativ zu diesem zu verdrehen, so dass in Umfangsrichtung des Behälters mehrere Kontakt- und Berührflächen des Behälters mit Haft- oder Klebemittel versehen werden können. Zweckmäßig ist dabei auch, wenn mehrere Auftragselemente vorgesehen sind, welche in Rotationsrichtung des Hauptsterns gesehen aufeinander folgen. Mittels der Drehteller können die aufstehenden Behälter zudem noch günstiger Weise nach bestimmten Behälter - und/oder Ausstattungsmerkmalen, also beispielsweise nach so genannten Embossings ausgerichtet und sodann behälterspezifisch so mit haft- und Klebemittel versehen werden, dass die Behälter eines Gebindes genau identisch ausgerichtet zueinander innerhalb des Gebindes aufgenommen sind.

In bevorzugter Ausgestaltung kann vorgesehen sein, dass jeweils zwei Auftragselemente übereinander angeordnet sind, wobei die nachfolgenden Auftragselemente ebenso übereinander angeordnet sind. So kann jeweils ein Auftragselement stets genau einen Behälterbereich, also einen Abschnitt der Kontaktund Berührfläche mit Haft- und Klebemittel versehen. Natürlich können die Auftragselemente beispielsweise bei einem sprühenden oder spritzenden Auftrag von Haft- und Klebmittel steuerbar sein, also in ihrer Neigung bezüglich jeder Raumachse einstellbar sein. Selbstverständlich können die Auftragselemente auch zumindest eine Teilstrecke mit dem betreffenden Behälter mitgeführt werden, was aber nicht zwingend notwendig ist.

Dem Sterntransporteur, bevorzugt dem Hauptstern oder der Ausleitvorrichtung ist unmittelbar ein Lineartransporteur nachgeschaltet, welcher beispielsweise als Abteil- oder Verdichterstrecke fungiert, wobei die Behälter zu Gebinden zusammengefasst und weitertransportiert werden, und wobei statische und/oder bewegliche Führungselemente jeweils seitlich des Lineartransporteurs vorgesehen sein können, und wobei Mitnehmerelemente vorgesehen werden können, welche jeweils einem Gebinde zugeordnet sind.

Die Führungselemente können auch als Geländer bezeichnet werden, welche die Gebinde, bzw. die Behälter des Gebindes zwischen sich führen bzw. stützen. Denkbar ist, die Führungselemente starr auszuführen. Möglich ist aber auch, die Führungselemente mitlaufend auszuführen, so dass die Behälter bzw. die Gebinde keine Relativgeschwindigkeit zu den seitlich angeordneten Führungselementen aufweisen. Mit den seitlich angeordneten Führungselementen kann ein seitlicher Druck erzeugt werden, welcher einer Klebverbindung der Behälter des Gebindes zweckdienlich ist. Mit anderen Worten haben die Führungselemente nicht nur die Funktion des Führens und Stützens sondern auch noch die Funktion eine auf die Behälter wirkende Kraft zu erzeugen, welche die Behälter bzw. das Gebinde quer zur Transportrichtung gesehen verdichtet, bzw. einander annähert, gegeneinander drückt oder anpresst, um so eine hinreichende Klebverbindung bewirken zu können.

In bevorzugter Ausgestaltung sind die Mitnehmerelemente quer zur Transportrichtung angeordnet, und übergreifen den Lineartransporteur vollständig, wobei die Mitnehmerelemente in Transportrichtung gesehen hinter dem Gebinde angeordnet, so dass die Mitnehmerelemente das Gebinde quasi vor sich herschieben. Hierdurch wird vorteilhaft eine Kraft erzeugt, welche eine Verbindung der Behälter untereinander in oder entgegen der Transportrichtung gesehen, bzw. eine Verdichtung unterstützt. Um den Verbund der Behälter des Gebindes untereinander nicht nur quer zur Transportrichtung, sondern auch in Transportrichtung gesehen zu verbessern, können die Mitnehmer in Transportrichtung gesehen eine bezüglich des Transporteurs bewirkende Relativgeschwindigkeit auf die Behälter bzw. auf das Gebinde aufbringen. Ist die Fördergeschwindigkeit des bzw. der Mitnehmerelemente größer als die Fördergeschwindigkeit des Lineartransporteurs, bewirkt dies ein Schieben bzw. Gleiten der Behälter bzw. des Gebindes von der Eingangsseite in Richtung zur Austragsseite. Ersichtlich ist, dass die Schiebekraft den Klebverbund deutlich erhöhen kann. Die Mitnehmerelemente können in bevorzugter Ausgestaltung als Stab, also als Mitnehmerstab ausgeführt sein. Weiter können die Mitnehmerelemente selbst angetrieben sein, und/oder mit den Führungselementen in Verbindung stehen. Insofern könnten die Führungselemente zu den bereits genannten Funktionen quasi noch die Führungsfunktion für die Mitnehmerelemente übernehmen. Sind die Führungselemente angetrieben, also umlaufend vorgesehen, liegt es durchaus im Sinne der Erfindung, die Mitnehmerelemente starr an den Führungselementen zu befestigen, wobei die oben erwähnte Relativgeschwindigkeit mittels des Führungselementenantriebes erzeugt werden könnte. Die Führungselemente könnten auch in Querrichtung betrachtet einstellbar sein, so dass die Vorrichtung auch auf unterschiedliche Behälterdimensionen einstellbar ist. Die Fördergeschwindigkeit des Lineartransporteurs, der Führungselemente und/oder der Mitnehmerelemente kann individuell einstellbar sein, wozu geeignete Steuerzentralen bzw. Zentrale Steuereinheiten einer Gesamtanlage herangezogen werden können.

Möglich ist, das Gebinde noch mit einem Trageelement, beispielsweise mit einem Griff zu versehen, wozu geeignete Vorrichtungen vorgesehen werden können, welche stromab der Austragsseite oder an geeigneter Stelle an dem Lineartransporteur angeordnet ist. Natürlich kann das Tragelement mit dem zuvor genannten Haft- oder Klebemittel an dem Gebinde befestigt werden.

Mit der Erfindung wird so eine Vorrichtung zur Herstellung eines Gebindes zur Verfügung gestellt, welche trotz des Verzichts auf eine umgreifende Folie und/oder trotz des Verzichts auf eine Umreifung in einfacher Weise vermeidet, dass die Behälter bei dem Transport in eine nestende Position gelangen, wobei auch nach der Entnahme eines oder mehrerer Behälter aus einem Gebinde der Zusammenhalt der verbliebenen Behälter im Gebinde erhalten bleibt bzw. wieder hergestellt werden kann. Durch den Verzicht auf eine Folie oder ein Umreifungsband (folienloser Flaschenpack), wird die Umwelt durch Vermeidung von Abfall entlastet, wobei so auch Ressourcen zur Herstellung der meist aus Kunststoff hergestellten Folien oder Unreifungen geschont werden. Die Behälter eines Gebindes werden während des Transportes, also im kontinuierlichen Betrieb der Vorrichtung zur Herstellung von Gebinden, bzw. der Verpackungsmaschine direkt aneinander geklebt. Zudem ist ein folienloser Flaschenpack bei minimalem Klebemittelauftrag erreichbar, welcher eine hinreichende Bindung der einzelnen Behälter zueinander aufweist.

Wie bereits oben angeführt, können die Behälter beispielsweise nach Gestaltungsmerkmalen ausgerichtet werden. Möglich ist, die Ausrichtfunktion auf einen gesonderten Ausrichtstern zu übertragen, welcher dem Hauptstern vorgeschaltet ist. Die Behälterströme können dem Ausrichtstern über einen Einleitstern zugeführt werden, wobei der Einleitstern dem zuvor genannten entspricht. Zwischen dem Ausrichtstern und dem Hauptstern ist bevorzugt ein Übergabestern angeordnet, welcher in weiter bevorzugter Ausführung die Dimensionen des Einleitsterns und/oder des zuvor genannten Ausleitsterns aufweisen kann. An dem Ausrichtstern sind Erkennungssysteme, also z.B. Kamerasysteme angeordnet, welche die tatsächliche Ist-Position beispielsweise von Etiketten und/oder Embossings und/oder anderen Merkmalen aufnimmt. Die Istdaten werden einer Auswerteeinheit zugeführt, in welcher ein Vergleich mit abgelegten Solldaten durchgeführt wird, so dass kopf- bzw. fußseitige Führungen, wie zum Beispiel Packtulpen oder Drehteller eine entsprechende Überführung des betreffenden Behälters in die gewünschte Soll-Position bewirken können. Eine solche Ausrichtung ist zum Beispiel bei Etikettiermaschinen bekannt, bei welcher z.B. Flaschen so ausgerichtet werden, dass Etiketten gleichorientiert auf den Flaschen aufgebracht werden. Zielführend kann mit der Ausrichtung bzw. mit dem Ausrichtstern erreicht werden, dass die Behälter mit Etiketten und/oder anderen Gestaltungsmerkmalen gleich orientiert in dem zukünftigen Gebinde aufgenommen sind; Denn die Behälter werden im Ausrichtstern in die jeweilige Sollposition überführt, wobei der in die individuelle Sollposition ausgerichtete Behälter nachfolgend in dem Hauptstern wie beschrieben behandelt wird. Der in die Sollposition ausgerichtete Behälter verbleibt entlang seines Transportweges in dieser.

Selbstverständlich können Behälter mit unterschiedlichen Dimensionen bzw. Formaten behandelt werden. Steht gegebenenfalls ein Formatwechsel an, müssen die Betriebsparameter und -komponenten auf das neue Behälterformat angepasst werden. Beispielsweise könnten Ein-, Überleit- und/oder Ausleitsterne ausgetauscht werden, wobei bei der Erfindung zielführend vorgesehen ist, den Ausrichtstern und/oder den Hauptstern mit verstellbaren Hauptachsen auszuführen, so dass der Ausrichtstern und/oder der Hauptstern trotz des Formatwechsels mit seinen Komponenten in der Behandlungsanlage verbleiben kann. Die Hauptachsen des Hauptsterns und/oder des Ausrichtsterns sind bevorzugt entlang der Transportrichtung und quer dazu überlagerbar auf das neue Behälterformat einstellbar. Die kopf- und/oder fußseitigen Führungen sind bevorzugt universell nutzbar ausgeführt.

Zielführend im Sinne der Erfindung ist auch, wenn der Sterntransporteur bzw. dessen Komponenten, bevorzugt der Hauptstern und/oder der Ausrichtstern mit einer Standsäule ausgeführt ist, in welcher ein Antriebselement integriert ist. Das Abtriebselement ist bevorzugt als ansteuerbarer E-Motor ausgeführt. Die Standsäule kann wie zuvor erwähnt natürlich entlang der Verstellachsen verfahrbar sein, um sich z.B. einem Formatwechsel anpassend einzustellen. Anstelle einer linearen Zuführung können die Behälter auch mittels eines Transportsternes für jeden Behälterstrom zugeführt werden.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:
- Fig. 1: einen Teilabschnitt einer Vorrichtung zum Herstellen eines Gebindes mit sechs Artikeln bzw. Behältern in einer perspektivischen Ansicht,
- Fig. 2: den Teilabschnitt aus Figur 1 in einer Aufsicht,
- Fig. 3: den Teilabschnitt aus Figur 1 in einer Seitenansicht,
- Fig. 4: eine beispielhafte Ausgestaltung einer Abteil- oder Verdichterstrecke in der beispielhaften Ausgestaltung als Lineartransporteur,
- Fig. 5: den Teilabschnitt aus Figur 1 in einer Aufsicht mit vorgeschalteten Ausrichtstern und anschließender Abteil- oder Verdichterstrecke
- Fig. 6: den Teilabschnitt aus Figur 5 in einer Seitensicht, und
- Fig. 7: den Teilabschnitt aus Figur 5 in einer Frontansicht von der Einlaufseite her.
- Fig. 8: Schematische Darstellung einer Vorrichtung zur Gebindeherstellung als elektromagnetischer, linearer Endlostransporteur und in
- Fig. 9: diese Vorrichtung in perspektivischer Darstellung

In den unterschiedlichen Figuren sind gleiche Teile stets mit denselben Bezugszeichen versehen, weswegen diese in der Regel auch nur einmal beschrieben werden.

Figur 11 zeigt einen Teilabschnitt einer Vorrichtung 1 zur Herstellung von Gebinden 2 aus Behältern 3, bzw. einer Verpackungsmaschine 1, wobei im Vorfeld aus einem breitem Behälterstrom Behälter 3 in mehrere, wie dargestellt beispielhaft in zwei einspurige Behälterströme 4.1 und 4.2 umgewandelt werden, in welchem die Behälter 3 beispielsweise bezüglich ihrer Behälter - und/oder Ausstattungsmerkmale eine willkürliche Orientierung aufweisen.

Jeweils ein Sterntransporteur 5 bzw. 5.1 und 5.2 ist für jeden der Behälterströme 4.1 und 4.2 vorgesehen ist, wobei der jeweilige Sterntransporteur 5 eine Vielzahl von fußseitigen Führungen 6 und Kopfführungen 7 für die Behälter 3 aufweist, wobei die Auftragselemente 8 an dem Sterntransporteur bzw. an seinem Hauptstern 12 bzw. 12.1 und 12.2 angeordnet sind, wobei die Behälter 3 stromab des Sterntransporteurs 5 zu dem Gebinde 2 zusammengefasst werden.

Die Behälter 3 werden von einer Eingangsseite 9 in Richtung zu einer Ausgangsseite 10 transportiert (axiale Transportrichtung 14), wobei die Auftragselemente 8 an dem Sterntransporteur 5 zum Auftragen von Haft- oder Klebemittel vorgesehen sind und wobei die Behälter 3 stromab des Sterntransporteurs 5 zu dem Gesamtgebinde 2 zusammengeführt und in Richtung zur Austragsseite 10 transportiert werden.

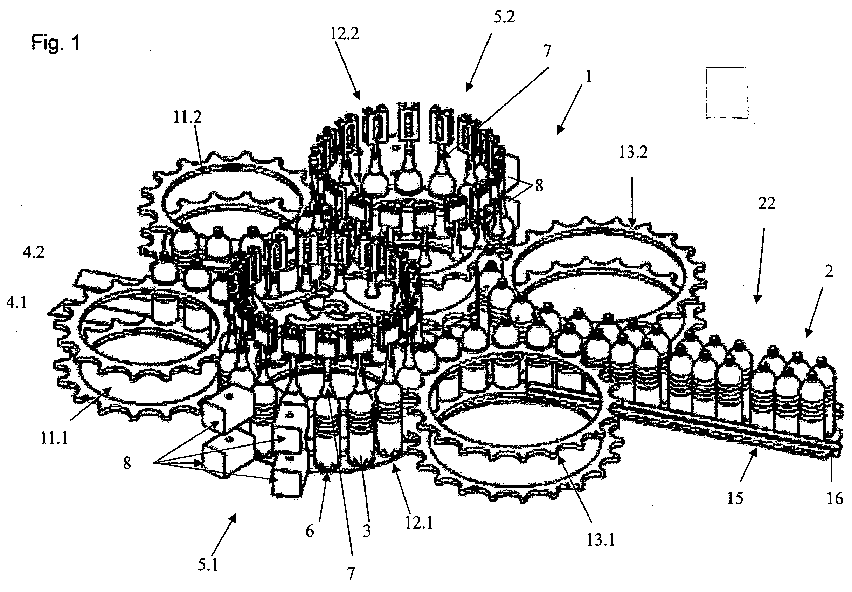

Figur 1 zeigt, dass jeder Sterntransporteur 5 bzw. 5.1 und 5.2 eine Einleitvorrichtung 11 bzw. 11.1 und 11.2, den Hauptstern 12, bzw. 12.1 und 12.2 und eine Ausleitvorrichtung 13 bzw. 13.1 und 13.2 für die jeweilige Behälterspur 4.1 und 4.2 aufweist. Die Einleitvorrichtung 11 ist als Einleitstern ausgeführt, wobei die Ausleitvorrichtung 13 als Ausleitstern ausgeführt ist. Da für jede Behälterspur 4.1 und 4.2 jeweils ein Sterntransporteur 5 vorgesehen ist, werden diese, bzw. deren Komponenten in den Figuren mit der Begleitzahl .1 bzw. 2 versehen um die Zuordnung zu der jeweiligen Behälterspur 4.1 und 4.2 zu verdeutlichen. Die jeweiligen Komponenten sind natürlich jeweils identisch.

Beispielhaft sind die fußseitigen Führungen 6 an dem Hauptstern 12 als Drehteller ausgeführt sind, wobei dessen Kopfführungen 7 halteseitig Pack- oder Zentriertulpen aufweisen bzw. als solche ausgestaltet sind. Der jeweilige Behälter 3 ist so quasi zwischen dem Drehteller 6 und der Packtulpe 7 lagesicher gehalten. Drehteller und Pack- oder Zentriertulpen sind zum Beispiel aus Etikettiermaschinen bekannt.

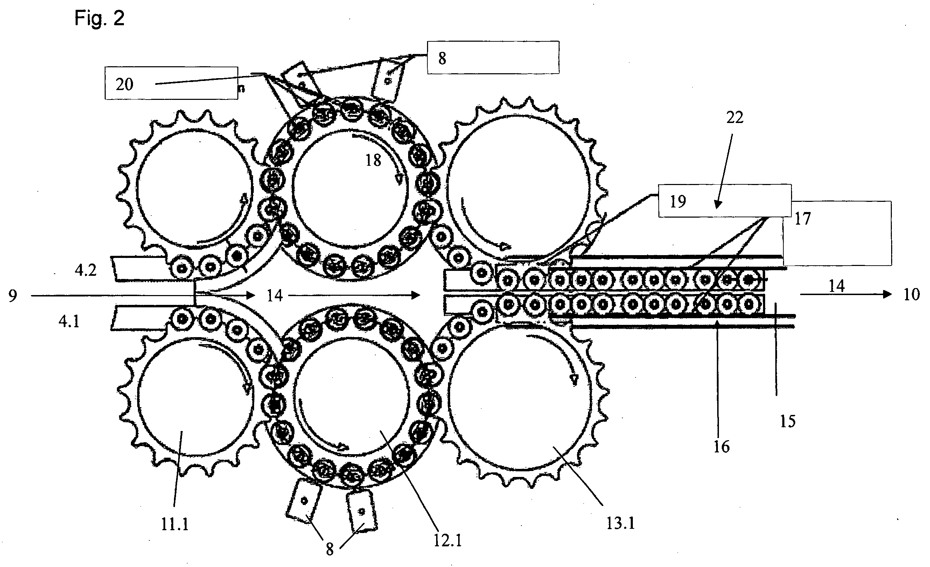

Wie in den Figuren 1 und 2 erkennbar sind mehrere Auftragselemente 8 an dem Hauptstern 12 vorgesehen, welche in Rotationsrichtung (Pfeil 18) des Hauptsterns 12 gesehen aufeinander folgen. Mittels der Drehteller 6 können die aufstehenden Behälter zudem noch günstiger Weise nach bestimmten Behälter - und/oder Ausstattungsmerkmalen, also beispielsweise nach so genannten Embossings ausgerichtet und sodann behälterspezifisch so mit Haft- und Klebemittel versehen werden, dass die Behälter 3 eines Gebindes 2 genau identisch ausgerichtet zueinander innerhalb des Gebindes 2 aufgenommen sind. Ein Drehen der Behälter kann aber auch nur einfach deswegen ausgeführt werden, um den oder die Behälter 3 in Umfangsrichtung gesehen an mehreren Kontakt- und Berührflächen mit Haft-und Klebemittel zu versehen. Ein Ausrichten bzw. Drehen z. B. vor Auftragselementen 8 und/oder zwischen in Rotationsrichtung 19 folgenden Auftragselementen 8 ist mit dem Bezugszeichen 20 in Figur 2 angedeutet.

In bevorzugter Ausgestaltung kann vorgesehen sein, dass jeweils zwei Auftragselemente 8 übereinander angeordnet sind, wobei die nachfolgenden Auftragselemente 8 ebenso übereinander angeordnet sind. So kann jeweils ein Auftragselement 8 stets genau einen Behälterbereich, also einen Abschnitt der Kontaktund Berührfläche mit Haft- und Klebemittel versehen. Natürlich können die Auftragselemente 8 beispielsweise bei einem sprühenden oder spritzenden Auftrag von Haft- und Klebmittel steuerbar sein, also in ihrer Neigung bezüglich jeder Raumachse einstellbar sein. Selbstverständlich können die Auftragselemente 8 auch zumindest eine Teilstrecke mit dem betreffenden Behälter 3 mitgeführt werden, was aber nicht zwingend notwendig ist.

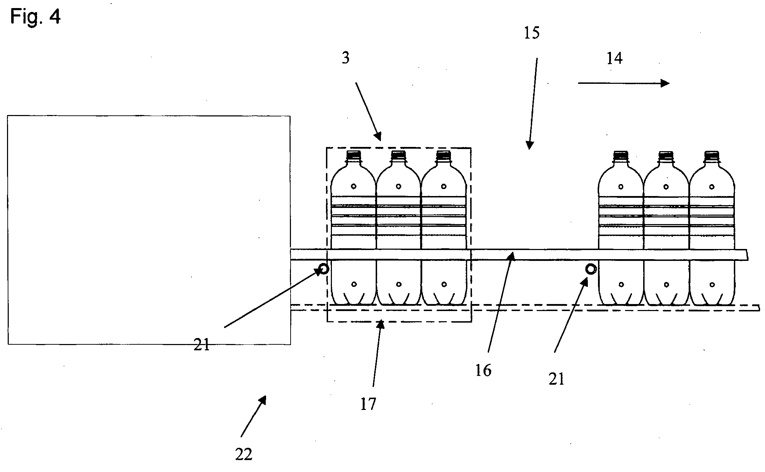

Unmittelbar stromab der Ausleitvorrichtung 13, bzw. beider Ausleitsterne 13.1 und 13.2 ist ein Lineartransporteur 15 angeordnet, welcher als Abteil- und/oder Verdichterstrecke 22 fungiert. Die Ausleitvorrichtung 13 bzw. die beiden Ausleitsterne 13.1 und 13.2 führen die klebenden Behälter 3 zusammen und übergeben die klebenden Behälter 3 Paarweise an den Lineartransporteur 15, was in Figur 2 mittels des Bezugszeichens 19 dargestellt ist. Dabei sind zunächst jeweils zwei klebende Behälter 3 über die Kontakt- und Berührflächen aneinander gedrückt, wobei der Lineartransporteur 15 so ausgeführt sein kann, dass ein Zusammenführen von mehreren, beispielsweise von drei Behälterpaaren zu dem Gebinde 2, welches sechs Behälter 3 aufweist, bewirkt wird. Hierzu kann der Lineartransporteur 15 Mitnehmerelemente 21 aufweisen, wobei zudem noch seitliche Führungselemente 16 vorgesehen werden können, wie in Figur 4 erkennbar ist.

Dem Sterntransporteur 5, bzw. der Ausleitvorrichtung 13 ist also der Lineartransporteur 15 nachgeschaltet, wobei statische und/oder bewegliche Führungselemente 16 jeweils seitlich des Lineartransporteurs 15 vorgesehen sein können, und wobei Mitnehmerelemente 21 vorgesehen werden können, welche jeweils einem Gebinde 2 zugeordnet sind. Die Mitnehmerelemente 21 können ein Zusammenführung entlang der axialen Transportrichtung 14, also ein aneinanderdrücken der Behälter 3 eines Gebindes 2 bewirken. Die Führungselemente 16 können eine Anpresskraft der Behälter 3 quer zur Transportrichtung 14 bewirken, so dass auch in Querrichtung der Klebeverbund günstig beeinflusst wird.

Wird eine Aushärtestation 17, zum Beispiel in der Ausgestaltung als UV-Aushärtestation für UV-aushärtenden Klebstoff erforderlich, ist diese zweckdienlich an dem Lineartransporteur 15 angeordnet.

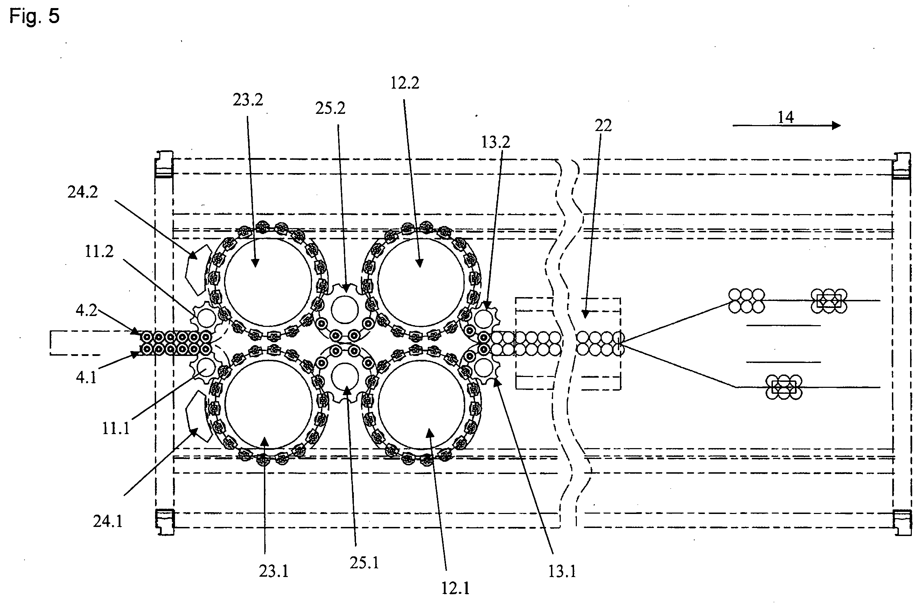

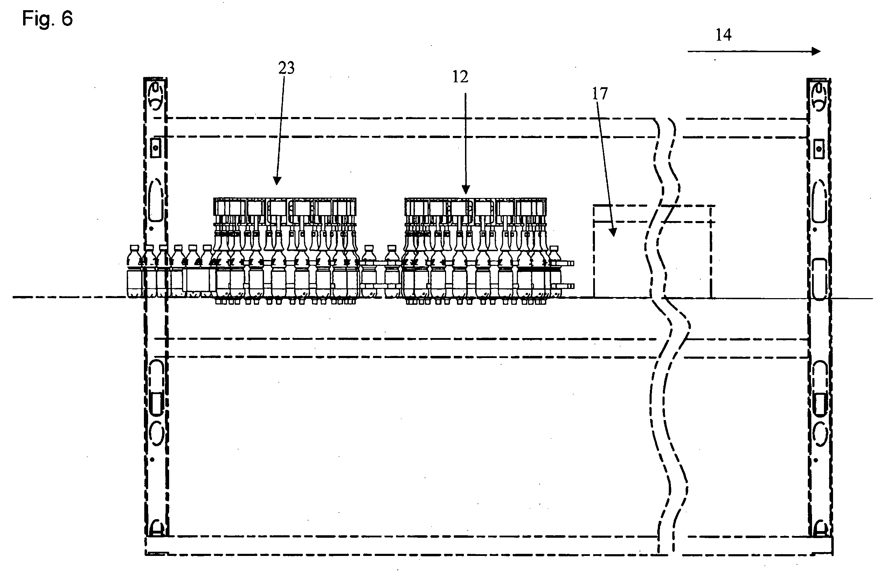

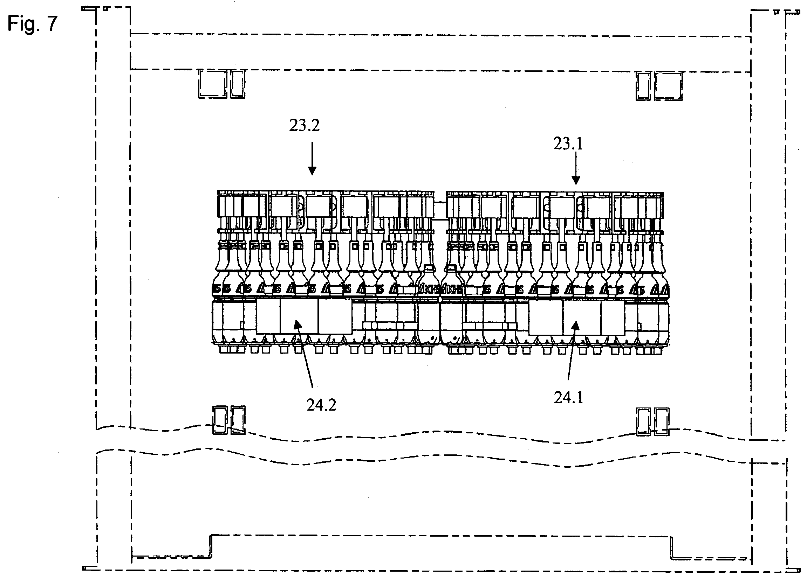

Wie bereits erwähnt, kann die Ausrichtung der Behälter 3 in eine Sollposition entlang des Transportweges des Hauptsterns 12.1 bzw. 12.2 erfolgen. Bei dem in den Figuren 5 bis 7 gezeigten Ausführungsbeispiel wird die Ausrichtung an einem Ausrichtstern 23.1 und 23.2 durchgeführt, welcher dem jeweiligen Hauptstern 12.1 und 12.2 vorgelagert ist. Die Behälter 3 der Behälterströme 4.1 und 4.2 werden dem Ausrichtstern 23.1 bzw. 23.2 über den jeweiligen Einleitstern 11.1 bzw. 11.2 zugeführt. An dem jeweiligen Ausrichtstern 23.1 bzw. 23.2 sind jeweils Erkennungssystem 24.1 bzw. 24.2 in der beispielhaften Ausgestaltung als Kamerasystem angeordnet. Zwischen dem jeweiligen Ausrichtstern 23.1 bzw. 23.2 und dem jeweiligen Hauptstern 12.1 bzw. 12.2 ist jeweils ein Übergabestern 25.1 bzw. 25.2 angeordnet, welcher in weiter bevorzugter Ausführung die Dimensionen des Einleitsterns 11.1 bzw. 11.2 und/oder des zuvor genannten Ausleitsterns 13.1 bzw. 13.2 aufweisen kann. Die beispielhaften Kamerasysteme 24.1 bzw. 24.2 nehmen die tatsächliche Ist-Position beispielsweise von Etiketten und/oder Embossings und/oder anderen Merkmalen auf. Die Istdaten werden einer Auswerteeinheit zugeführt, in welcher ein Vergleich mit abgelegten Solldaten durchgeführt wird, so dass kopf- bzw. fußseitige Führungen, wie zum Beispiel Packtulpen 7 oder Drehteller 6 eine entsprechende Überführung des betreffenden Behälters 3 in die gewünschte Soll-Position bewirken können. Der in die Sollposition ausgerichtete Behälter 3 verbleibt entlang seines Transportweges in dieser. Der Gebindestrom wird im weiteren Verlauf der Abteilund/oder Verdichterstrecke 22 beispielhaft in zwei parallele Gebindeströme aufgeteilt, wie in Figur 5 beispielhaft erkennbar ist.

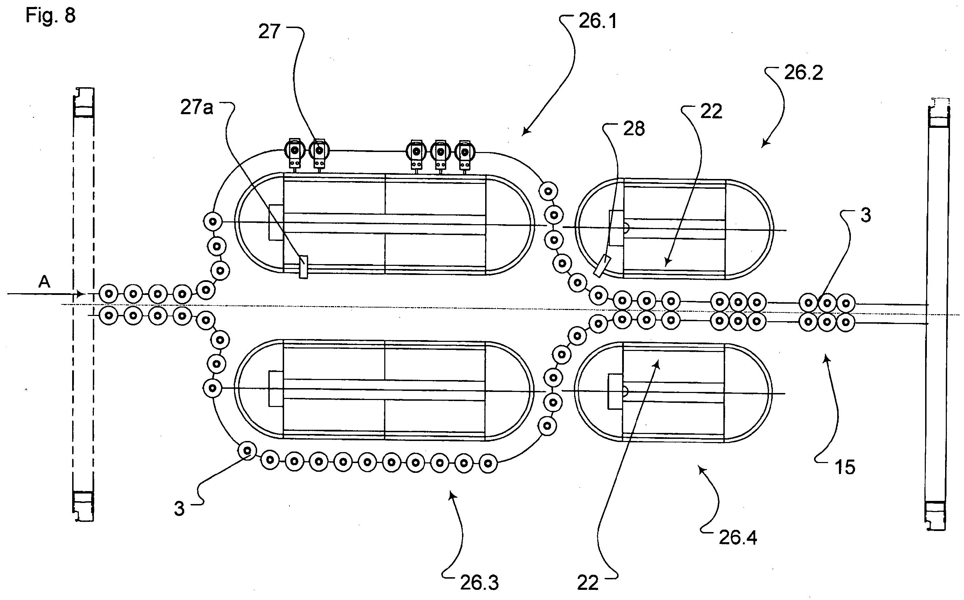

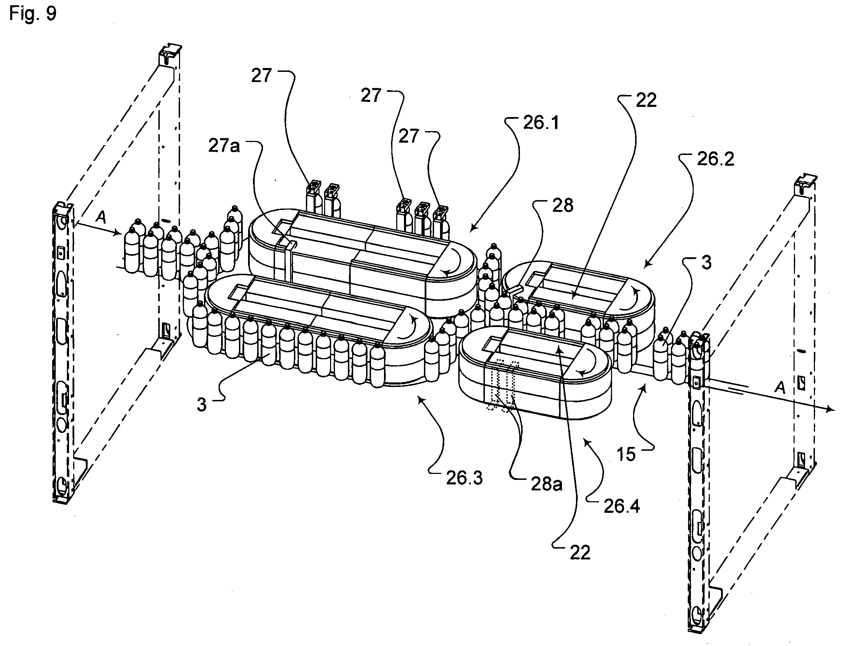

Bei einer verbesserten Ausführungsform der Vorrichtung (Fig. 8, 9), sind die Sterntransporteuer durch endlos umlaufende Transportsysteme ausgetauscht, welche als Linearantriebe ausgebildet sind, bei welchen umlaufende und elektrisch antreibbare Schlitten vorgesehen sind. Dabei sind die Behälterführungen pro Behälter 3, wie bspw. die fußseitigen Führung 6 und/oder die Kopfführungen 7, auf einem solchen Trägerschlitten 27 angeordnet. Weiterhin sind auf dem Trägerschlitten 27, vorteilhafterweise die Antriebe vorgesehen, zur Rotation der Behälter 3 um deren Hochachse.

Besonders bevorzugt arbeiten die Linearantriebe 26 nach dem Prinzip einesr elektro-magnetischen Linearantriebes, so dass jeder Transportschlitten 27 zumindest abschnittsweise im Umlaufbereich des Linearantriebes 26 unabhängig von andern Trägerschlitten 26 antreibbar ist.

Der ortsfeste Teil des Linearantriebes 26 bildet dabei eine Führung für die beweglichen Transportschlitten, wobei in Bewegungs- oder Transportrichtung der Schlitten aufeinander folgend eine Vielzahl von Magnetpolen mit zugehörigen individuell ansteuerbaren Wicklungen vorgesehen sind, sowie Permanentmagnete die an oder in den Transportschlitten 27 vorgesehen sind. Ein derartiger Linearantrieb wird unter der Marke "PackTrak" bspw. von der Siemens AG auf dem Markt angeboten.

Figur zeigt skizzenhaft einen solchen Aufbau aus je zwei elektromagnetischen Linearantrieben 26.1 und 26.2 für die eine Behälterreihe (obere in Figur 8) und Linearantrieb 26.3 und 26.4 für die untere Behälterreihe in der Figur 8. Die beiden Behälterreihen laufen analoge der vorgenannten Beispiele zweireihig ein und werden von den umlaufenden Linearantrieben 26.1 und 26.3 bzw. deren Trägerschlitten 27 aufgenommen. Ein ggf. noch vorzusehendes Einlauf- oder Übergabeelement 29 ist als Kreis angedeutet. Natürlich können die Behälterzuführungen in Transportrichtung A auch derart angeordnet werden, dass diese fluchtend zur Geraden oder tangential zur Kehre des Linearantriebes 26 einlaufen.

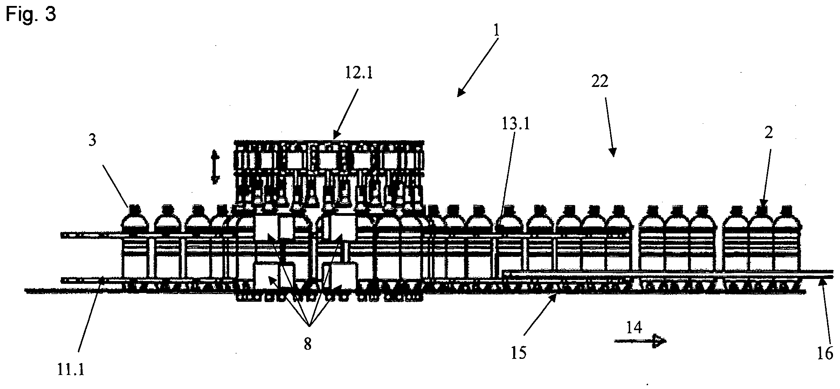

Die nur schemenhaft gezeigten Trägerschlitten 27 tragen die Behälter 3. Die Positions- und Drehwinkelerfassung, Ausrichtung und Behandlung der Behälter 3 erfolgt analog der vorgenannten Beispiele und Ausführungen, insb. zu den Figuren 1 bis 7.

Mit den Bezugszeichen 27a und 28a sind Trägerschlitten gekennzeichnet, die sich auf der Rückführung befinden, um erneut einen Behälter 3 aufzunehmen oder auf diese einzuwirken. Die Antriebe für die Drehbewegung der Behälter 3 sowie die oben beschriebenen Behandlungsstationen und Aggregate sind aus diesem Grunde auch nicht noch einmal dargestellt oder beschrieben, da eine analoge Gestaltung und Positionierung zu wählen ist.

Die Besonderheit der hier gezeigten Lösung besteht darin, dass die hinteren Linearantriebe 26.2 und 26.4 bzw. deren Trägerschlitten 28 (nur drei schematisch dargestellt) derart erfolgen kann, dass die Behälter 3 im Bereich des Einlaufes (Übergang von z.B. 26.1 nach 26.2), die Behälter noch auf Abstand gehalten werden, um ein frühzeitiges Annähern und ungewolltes Verkleben zu vermeiden. Nachfolgend werden die gewünschten Behältergruppen (hier bspw. 6 Behälter aus je zwei Reihen von drei Behältern) im Bereich der Geraden gebildet, die eine Abteilund/oder Verdichterstrecke 22 darstellt, indem die Behälter 3 oder Teilgruppen von Behältern in geeigneterer Weise relativ zueinander beschleunigt oder verlangsamt werden.

Zum Beispiel können zuerst je zwei benachbarte Behälter quer zur Transportrichtung an den Haftstellen in Kontakt gebracht werden (ggf. nach vorheriger Erfassung und Ausrichtung der Haft- und Klebepunkte), und diese dann verbundenen Behälterteilgruppen in geeigneter Weise beschleunigt oder verlangsamt werden, um das gewünschte Verdichten und Aneinanderpressen mit in Transportrichtung benachbarten Behälterteilgruppen zu erlangen. Die Behälter werden dabei idealerweise so lange verdrehsicher gehalten, bis eine ausreichende Aushärtung und/oder Trocknung sicher gestellt ist.

Die so gebildeten Gebinde oder Behältergruppen können schlussendlich auf einen Lineartransporteur 15 entlassen werden.

In dem gezeigten Beispiel der Figuren 8 und 9 wird der Behälter nur im Bereich des Linearantriebes 26.1 bzw. 26.3 von den Tragschlitten 27 rotierbar gelagert getragen transportiert. Nach Übergabe oder Überführung in den Eingriffsbereich der hintern Linearantriebe 26.2 und 26.4 werden die Behälter 3 idealerweise nur noch verdrehsicher gehalten, da bei Kenntnis der Winkellage der Haft- und Klebestellen keine Rotation der Behälter 3 um die Hochachse mehr nötig und auch nicht mehr gewünscht ist. Hierbei ist eine tragende Greiferführung der Behälter 3 vorteilhaft oder ein schiebender Transport auf einer hierfür geeigneten Grundfläche, idealerweise einem metallischen Untergrund.

Eine verbesserte Aufführungsform des Linearantriebes 26 bzw. dessen Transportschlitten 28 besteht darin, dass die Greif- und Haltemittel, mit denen die Behälter 3 fixiert werden, quer zur Haupttransportrichtung A verschiebbar und antreibbar sind. Dies verbessert die Anhaftung von benachbarten Behältern 3, da jede Rotationsbewegung so vermieden wird.

Natürlich kann die Einheit auch derart zusammengestellt werden, dass nur der Hauptstern gem. der Beispiele aus den Figuren 1 bis 5 oder nur der Auslaufstern in vorgenannter Art und Weises als Lineartransporteur, insbesondere einem elektromagnetisch angetriebenen Lineartransporteur mit unabhängig steuer- und antreibbaren Schlitten, ausgebildet werden.

### Bezugszeichenliste:

- 1: Vorrichtung zur Herstellung von Gebinden/Verpackungsmaschine
- 2: Gebinde
- 3: Behälter
- 4: Behälterspur (4.1 und 4.2)
- 5: Sterntransporteur
- 6: Fußseitige Führung
- 7: Kopfführung
- 8: Auftragelemente
- 9: Eingangsseite
- 10: Ausgangsseite
- 11: Einleitvorrichtung
- 12: Hauptstern
- 13: Ausleitvorrichtung
- 14: Axiale Transportrichtung
- 15: Lineartransporteur
- 16: Führungselemente
- 17: Aushärtestation
- 18: Rotationsrichtung von 12
- 19: Zusammenführen von 3 aus 13 auf 15
- 20: Drehen von 3
- 21: Mitnehmerelemente
- 22: Abteil- und/oder Verdichtereinheit /strecke
- 23: Ausrichtstern
- 24: Erkennungssystem
- 25: Übergabestern
- 26: Linearantrieb (elektrischer)
- 27: Trägerschlitten
- 28: Trägerschlitten
- 29: Einlaufelement

## Patentansprüche

1. Vorrichtung zur Herstellung von Gebinden (2), umfassend eine ein- oder mehrbahnige Behälterzuführung oder ein- oder mehrbahnige Behälterströme (4.1 und 4.2) mindestens einen um eine zentrale Achse rotierenden Hauptstern (12) eines Sterntransporteurs (5), wobei ein Sterntransporteur (5) für jeden der Behälterströme (4.1 und 4.2) vorgesehen ist, und wobei der jeweilige Hauptstern (12) des jeweiligen Sterntransporteur (5) eine Vielzahl von fußseitigen Führungen (6) und/oder Kopfführungen (7) für Behälter (3) aufweist, **dadurch gekennzeichnet, dass** ein Sterntransporteur (5) mit mindestens einem Auftragselement (8) im Bereich des Sterntransporteurs (5) umfasst ist, mittels welchem mindestens ein Haft- oder Klebemittel und/oder mindestens ein Haft- oder Klebemittelauftrag auf oder an Behälter applizierbar (3) ist, und wobei unmittelbar nach dem Hauptstern (12) oder einer Ausleitvorrichtung (13) eine Abteil- und/oder Verdichtereinheit oder eine Abteil- und/oder Verdichterstrecke (22) zum Gruppieren und Verdichten sowie temporäre Anpressung einer vorbestimmten Anzahl von Behältern (3) vorgesehen ist, mittels welcher die Behälter (3) stromab des Sterntransporteurs (5) zu dem Gebinde zusammengefasst und weitertransportiert werden.

2. Vorrichtung nach Anspruch 1, **dadurch gekennzeichnet, dass** der jeweilige Hauptstern (12) des jeweiligen Sterntransporteurs (5) sowohl eine Vielzahl von fußseitigen Führungen (6) und Kopfführungen (7) für die Behälter aufweist.

3. Vorrichtung nach Anspruch 1 oder 2, **dadurch gekennzeichnet, dass** stromabwärts des Sterntransporteurs (5) ein Lineartransporteur (15) angeordnet ist, welcher als eine Abteil- und/oder Verdichterstrecke (22) fungiert, und auf welchem die Behälter (3) zu Gebinden (2) zusammengefasst und weitertransportiert werden.

4. Vorrichtung nach einem der vorhergehenden Ansprüche, **dadurch gekennzeichnet, dass** die fußseitigen Führungen (6) als Drehteller ausgeführt sind, wobei die Kopfführungen (7) eine Pack- und Zentriertulpe aufweisen oder als solche ausgestaltet sind.

5. Vorrichtung nach einem der vorhergehenden Ansprüche, **dadurch gekennzeichnet, dass** die Auftragselemente (8) in Rotationsrichtung des Hauptsterns (12) aufeinander folgend angeordnet sind.

6. Vorrichtung nach einem der vorhergehenden Ansprüche, **dadurch gekennzeichnet, dass** jeweils zumindest zwei Auftragselemente (8) übereinander angeordnet sind.

7. Vorrichtung nach einem der vorhergehenden Ansprüche, **dadurch gekennzeichnet, dass** dem jeweiligen Hauptstern (12.1 bzw. 12.2) jeweils ein Ausrichtstern (23.1 bzw. 23.2) vorgeschaltet ist.

8. Verfahren zum Herstellen von Gebinden, **dadurch gekennzeichnet, dass** eine Vorrichtung nach einem der vorherigen Ansprüche verwendet wird.

9. Verfahren nach Anspruch 8, **dadurch gekennzeichnet, dass** mittels der Auftragselemente ein flüssiges Klebemittel aufgetragen wird.

10. Verfahren nach Anspruch 9, **dadurch gekennzeichnet, dass** das flüssige Klebemittel ein UV-aushärtender Klebstoff oder ein Heißleim ist.

## Claims

1. Device for forming packaging units (2), comprising a one-track or multi-track container delivery system or one-track or multi-track container streams (4.1 and 4.2), at least one main star (12) of a star transporter (5), rotating about a central axis, wherein a star transporter (5) is provided for each of the container streams (4.1 and 4.2), and wherein the respective main star (12) of the respective star transporter (5) in each comprises a plurality of foot-side guide elements (6) and/or head guide elements (7) for containers (3), **characterised in that** a star transporter (5) with at least one application element (8) is included in the region of the star transporters (5), by means of which an adhesive or glue agent and/or at least one glue or adhesive agent application can be applied onto or at containers (3), and wherein a compartmentalisation and/or compaction unit or a compartmentalisation and/or compaction segment (22) is provided for the grouping and compacting and temporary pressing together of a predetermined number of containers (3), by means of which the containers (3) are grouped together to form the packaging unit downstream of the star transporter (5) and are transported onwards.

2. Device according to claim 1, **characterised in that** the respective main star (12) of the respective star transporter (5) in each case comprises both a plurality of foot-side guide elements (6) and head guide elements (7) for the containers.

3. Device according to claim 1 or 2, **characterised in that**, arranged downstream of the star transporter (5), is a linear transporter (15), which functions as a compartmentalisation and/or compaction segment (22), and on which the containers (3) are grouped together to form packaging units (2) and are transported onwards.

4. Device according to any one of the preceding claims, **characterised in that** the foot-side guide elements (6) are configured as rotating plates, wherein the head guide elements (7) comprise a packing and centring tulip, or are configured as such.

5. Device according to any one of the preceding claims, **characterised in that** the application elements (8) are arranged following one another in the rotation direction of the main star (12).

6. Device according to any one of the preceding claims, **characterised in that** in each case at least two application elements (8) are arranged above one another.

7. Device according to any one of the preceding claims, **characterised in that** in each case an alignment star (23.1 or 23.2 respectively) is arranged upstream of the respective main star (12.1 or 12.2 respectively).

8. Method for forming packaging units, **characterised in that** a device is used in accordance with any one of the preceding claims.

9. Method according to claim 8, **characterised in that**, by means of the application elements, a liquid adhesive is applied.

10. Method according to claim 9, **characterised in that** the liquid adhesive is a UV-hardening adhesive or a hot glue.

## Revendications

1. Dispositif servant à fabriquer des unités d'emballage (2), comprenant une amenée de contenants à une ou à plusieurs voies ou des flux de contenants (4.1 et 4.2) à une voie ou à plusieurs voies, au moins une étoile principale (12), en rotation autour d'un axe central, d'un transporteur en étoile (5), dans lequel un transporteur en étoile (5) est prévu pour chacun des flux de contenants (4.1 et 4.2), et dans lequel ladite étoile principale (12) de chaque transporteur en étoile (5) présente une pluralité de guidages (6) côté pied et/ou de guidages de tête (7) pour des contenants (3), **caractérisé en ce qu'**un transporteur en étoile (5) pourvu au moins d'un élément d'application (8) est compris dans la zone du transporteur en étoile (5), au moyen duquel au moins un adhésif ou une colle et/ou au moins une couche d'adhésif ou une couche de colle peuvent être appliqués sur ou au niveau des contenants (3), et dans lequel une unité de tri et/ou de compactage ou une ligne de tri et/ou de compactage (22) servant au regroupement et au compactage ainsi qu'une compression temporaire d'un nombre prédéfini de contenants (3) sont prévus directement après l'étoile principale (12) ou après un dispositif de déviation (13), au moyen desquels les contenants (3) sont rassemblés en aval du transporteur en étoile (5) afin de former l'unité d'emballage et continuent à être transportés.

2. Dispositif selon la revendication 1, **caractérisé en ce que** ladite étoile principale (12) de chaque transporteur en étoile (5) présente aussi bien une pluralité de guidages (6) côté pied que de guidages de tête (7) pour les contenants.

3. Dispositif selon la revendication 1 ou 2, **caractérisé en ce qu'**un transporteur linéaire (15) est disposé en aval du transporteur en étoile (5), lequel fait office de ligne de tri et/ou de compactage (22) et sur lequel les contenants (3) sont rassemblés pour former des unités d'emballage (2) et continuent à être transportés.

4. Dispositif selon l'une quelconque des revendications précédentes, **caractérisé en ce que** les guidages (6) côté pied sont réalisés sous la forme de plateaux tournants, dans lequel les guidages de tête (7) présentent une tulipe de conditionnement et de centrage ou sont configurés sous la forme d'une tulipe de ce type.

5. Dispositif selon l'une quelconque des revendications précédentes, **caractérisé en ce que** les éléments d'application (8) sont disposés de manière à se suivre les uns les autres dans une direction de rotation de l'étoile principale (12).

6. Dispositif selon l'une quelconque des revendications précédentes, **caractérisé en ce que** respectivement au moins deux éléments d'application (8) sont disposés l'un au-dessus de l'autre.

7. Dispositif selon l'une quelconque des revendications précédentes, **caractérisé en ce que** respectivement une étoile d'orientation (23.1 ou 23.2) est montée en amont de ladite étoile principale (12.1 ou 12.2).

8. Procédé servant à fabriquer des unités d'emballage, **caractérisé en ce qu'**un dispositif selon l'une quelconque des revendications précédentes est utilisé.

9. Procédé selon la revendication 8, **caractérisé en ce qu'**une colle liquide est appliquée au moyen des éléments d'application.

10. Procédé selon la revendication 9, **caractérisé en ce que** la colle liquide est une matière adhésive durcissant sous l'action d'UV ou une colle durcissable à chaud.
